(19) Europäisches Patentamt / European Patent Office / Office européen des brevets

(11) **EP 3 633 573 A1**

(12) **EUROPEAN PATENT APPLICATION**

(43) Date of publication:
08.04.2020 Bulletin 2020/15

(51) Int Cl.:
*G06Q 20/34* (2012.01)    *G06Q 10/10* (2012.01)

(21) Application number: 18000794.0

(22) Date of filing: 05.10.2018

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Giesecke+Devrient Mobile Security GmbH**
**81677 München (DE)**

(72) Inventors:
- **Boelle, Christian**
  **411001 Pune (IN)**
- **Naik, Raghavendra G**
  **411027 Pune (IN)**
- **Jain, Abhishek**
  **411021 Pune (IN)**

(54) **METHOD AND SYSTEM FOR IDENTITY-BASED INSTANT ISSUANCE OF CARDS**

(57)    Systems, methods, and apparatus consistent with the present invention provide for instant issuance of smart cards, therein encompassing and thereby avoiding redundancy of legacy virgin cards and / or data-generation scripts, which are inventively arranged to correspondingly deploy as a function dependent on identification of said cards by virtue of their card production lifecycle data. Data-generation scripts are hosted in a remote facility and called, over a communications network, in a selectivity determined by aforementioned identification of the cards.

FIGURE 1

EP 3 633 573 A1

## Description

### Field of the invention

The present invention concerns with the difficulty in adopting script-level upgrades across asynchronous inventories of manually-replaceable resources, particularly blank cards, held within geographically distributed discrete facilities for instant issuance of cards.

### Background of the invention and description of related art

Smart card based processes have become universally well known and ubiquitous having essentially changed the ease in which identification, authentication, and authorization are securely conducted in the world of today. The convenience of having on-the-spot issuance of instantly-activated smart cards has helped further this realm of ease to newer and larger base of customers and thereby deepen relations with existing ones for card-issuing authorities.

Consequently, systems, methods, and apparatuses for instant issuance of cards have become commonplace in the urbanized world of today. Issuance of these cards is coordinated through a plurality of geographically distributed facilities each of which is maintained, stocked, and supervised by the card issuing authority who provides each facility with its own set of consumables including an inventory of blank cards. These on-site instant issuance facilities are established, in form of card issuance stations, personalization bureaus or kiosks within reach of users at convenient locations including banks, cafes, office complexes, airports, railway stations, prominent streets and so on.

As will be readily appreciated from the nature of implementation described above, the consumption of inventories of consumables between said instant issuance facilities is squarely dependent on usage profiles of each facility. For example, an instant issuance facility deployed in a location having heavy footfall / high requisition / large population is expected to exhaust its supplies in a faster manner than compared to an instant issuance facility established at another location having opposite characteristics to those of the former. Therefore, the stocks / inventories of consumables ends up being asynchronous across multiple instant issuance facilities deployed in different geographies.

Aforesaid inventories of consumables, particularly blank cards in instant card issuance facilities, have to be manually replenished. Replenishment in case of exhaustion of stock is relatively easy as it is one-way process and can be scheduled / initiated ahead of time, say triggered upon reaching a minimum threshold of cards remaining. However, it is an issue here that the replenishment is asynchronous, meaning that issuance facilities which experience higher customer footfall would mandate higher replenishment frequency than issuance facilities which have slower exhaustion of said consumables. This creates a burden of time, efforts and costs on the card issuer which persists today for want of a befitting solution.

Replacement of consumables, particularly blank cards, upon events such as migration of card type or data-generation script is much more arduous than replenishment in case of exhaustion of stock as it involves a herculean effort on part of the card issuing authority that must carefully plan and meticulously execute logistics (in case of new stocks) and also reverse logistics or destruction (in case of old stocks). Any slightest error in these processes risks catastrophic aftermaths, besides leaving the system vulnerable to unscrupulous activities and / or members of the consumable inventories entering into fake / unauthorized circulation. These effects are most undesirable and deserve befitting solutions once and for all.

As said before, asynchronous inventories of consumables, particularly blank cards, is a common hindrance while effecting migration of card type/s or data-generation script/s, which forces the card issuing authority to either delay or dissimilarly implement said migration across various instant issuance facilities, that is it must wait until prior stocks of cards have been consumed or replenished before stock-clearance and / or the new data-generation script is integrated at each of the instant issuance facilities. Only option to avoid these is to compulsorily replace all existing stocks of consumables, particularly blank cards, while causing the old stocks (which are often unused, and technically sound) to be brought and stored or otherwise destroyed securely. This defeats the purpose of instant issuance besides creating a burden of time, efforts and costs on the card issuer which together persist today for want of a befitting solution.

Simultaneous re-stocking with newer cards and / or integration of new data-generation scripts at all instant issuance facilities under charge of a card-issuer is not an effective solution because feasibility is subject to scale (number and geographical distribution of said remote dispensing facilities) and availability of multiple human and machine resources for parallel deployment. Moreover, the logistics, costs, and small-yet-significant system downtimes in simultaneous re-stocking with newer cards and / or integration of new data-generation scripts thus far outweighs the assurance of convenience and seamless service uptime desired in instant card issuance processes.

Non-simultaneous or phased replacement with newer cards and / or integration of new data-generation scripts at all instant issuance facilities under charge of a card-issuer is not an option at all since it creates multiplicity of resources to be organized, maintained, stocked, and supervised by the card-issuer. Also, replacement of data-generation scripts is an event triggered by upgrade or security instances commissioned by the card-issuer. Replenishment of cards is subject to exhaustion of old stocks or implementation of newer generation / type of card. These events are not essentially linked, but have common issues as recited here above while contemplating any alteration in their respect, on-site, at remote dispensing facilities under charge of a card-issuer.

Another aspect while contemplating change in cards and / or integration of new data-generation scripts is that of resources made redundant. Particularly, prior versions of data-generation scripts and good but unused cards may need to be recalled from the system, therein causing loss of inventory value, and pileup of e-waste, which additionally burdens the card-issuer. Hence, there is an acute need to have some means that negates the need for immediate simultaneous re-stocking with newer cards and / or integration of new data-generation scripts in instant card issuance systems.

Prior art, to the extent surveyed does not list a single effective solution embracing all considerations mentioned hereinabove, thus preserving an acute necessity-to-invent in locus of the field hereof. The present inventors have, through focused research, come up with a novel solution for resolving at least a major of these needs once and for all. Work of said inventors, specifically directed against the technical problems recited hereinabove and currently part of the public domain including earlier filed patent applications, is neither expressly nor impliedly admitted as prior art against the present disclosures which are maintained to be entirely novel and inventive.

A better understanding of the objectives, advantages, features, properties and relationships of the present invention will be obtained from the detailed disclosure to follow which sets forth an illustrative yet-preferred embodiment.

## Objectives of the present invention

The present invention is identified in addressing at least all major deficiencies of art discussed in the foregoing section by effectively addressing the objectives stated under, of which:

It is a primary objective of the present invention to provide a method to allow instant card issuance facilities to implement migration to newer card type/s and / or data generation script/s seamlessly irrespective of having asynchronous inventories of blank cards.

It is another objective of the present invention in addition to the aforesaid objective(s) that the method so provided allows unique identification of card type/s for elective application correspondingly among a library of data generation script/s compatible to said card type/s.

It is another objective further to the aforesaid objective(s) that unique identification of card type/s in the method so provided is based on an identifier already present and readily advertised by cards.

It is another objective further to the aforesaid objective(s) that the method so provided ensures non-redundancy of resources, specifically the blank or unused (virgin) cards previously stocked in any instant card issuance facility.

It is another objective further to the aforesaid objective(s) that the method so provided ensures non-redundancy of resources, specifically the data-generation script/s previously deployed by the card issuer at any instant card issuance facility under charge of said card issuer.

It is another objective further to the aforesaid objective(s) that the method so provided creates a system including a remote facility alowing centralized administration and supervisory control over implementation of said method.

It is another objective further to the aforesaid objective(s) that the method so provided negates the need for forced replenishment of existing card type/s stocked with instant card issuance facilities for implementing migration to newer card type/s and / or data generation script/s.

It is another objective further to the aforesaid objective(s) that the method so provided is capable of implementation in a manner which is without large investments of capital, manpower, and resources on part of the card-issuer.

It is another objective further to the aforesaid objective(s) that the method so provided is capable of implementation in a manner which creates no difference in implementation or requires no special knowledge on part of the card-holder.

It is another objective further to the aforesaid objective(s) that the method so provided is capable of implementation in a manner which is both functionally and cost-wise effective to manifest at large scale of operations with even a large number of geospatially distributed instant card issuance facilities.

The manner in which the above objectives are achieved, together with other objects and advantages which will become subsequently apparent, reside in the detailed description set forth below in reference to the accompanying drawings and furthermore specifically outlined in the independent claim 1. Other advantageous embodiments of the invention are specified in the dependent claims.

## Summary

The present invention attempts to resolve the wants of art, by meeting the objectives stated hereinabove and most, if not all, lacunae of the background of this invention. Specifically, a method is provided wherein cards are identified, at the point of issuance, by virtue of their CPLC data, and correspondingly made to undergo treatment, such as customized personalization using relevant data-generation script. A library of data-generation scripts is maintained at a central remote facility in charge of the card-issuer or a trusted service which is interactively networked to all instant card issuance facilities in charge of said card-issuer. Selective deployment among the library of data-generation scripts is commissioned, over the air, on basis of card identified at the instant issuance facility, thereby creating a sandbox for issuance of cards irrespective of whether, or not, they correspond to the same generation of cards, or run the same version of data-generation script.

**Brief description of drawings**

The present invention is explained herein under with reference to the following drawings, in which:

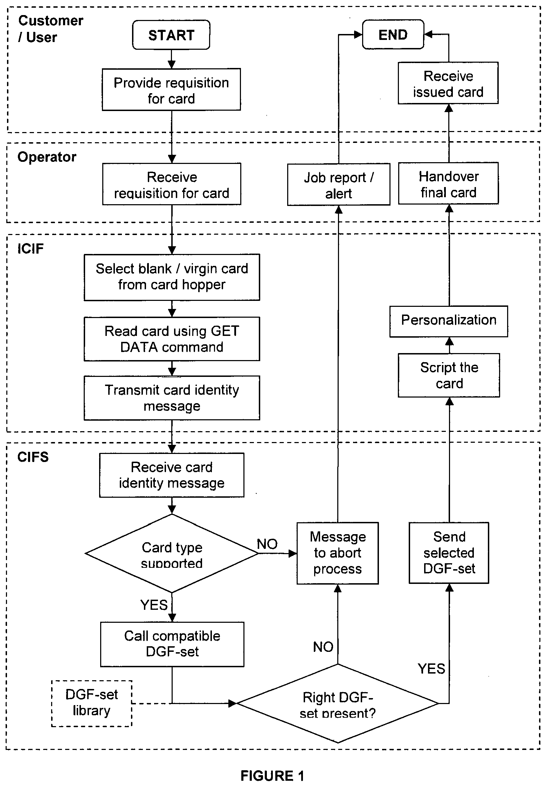

FIGURE 1 is a flowchart describing the process-flows in implementation of the present invention.

The above drawings are illustrative of particular examples of the present invention but are not intended to limit the scope thereof. The drawings are not to scale (unless so stated) and are intended for use solely in conjunction with their explanations in the following detailed description. In above drawings, wherever possible, the same references and symbols have been used throughout to refer to the same or similar parts. Though numbering has been introduced to demarcate reference to specific components in relation to such references being made in different sections of this specification, all components are not shown or numbered in each drawing to avoid obscuring the invention proposed.

Attention of the reader is now requested to the detailed description to follow which narrates a preferred embodiment of the present invention and such other ways in which principles of the invention may be employed without parting from the essence of the invention claimed herein.

**Definitions and interpretations**

Before undertaking the detailed description of the invention below, it may be advantageous to set forth definitions of certain words or phrases used throughout this patent document: the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect, with, contain, be contained within, connect to or with, couple to or with, be communicable with, cooperate with, interleave, juxtapose, be proximate to, be bound to or with, have, have a property of, or the like; and the term "card" refers a smart card of any form factor available in common art; "CPLC" refers card production life cycle data; "ICIF" refers an instant card issuance facility and includes a card personalization station or bureau deployed in geographies convenient and accessible to users; "DGS" refers data-generation script; "CIFS" refers centralized issuance facility server; "DGS-set" refers DGS and its corresponding bundled profile and keyset; "OS" refers operating system; "IC" refers integrated circuit; "card issuing authority" refers a bank, card company or any trusted entity involved in issuing cards to users; "APDU" refers an application protocol data unit; "operator" refers a human attendant or alternatively an automated electronic / robotic system.

**Detailed description**

Principally, general purpose of the present invention is to assess disabilities and shortcomings inherent to known systems comprising state of the art and develop new systems incorporating all available advantages of known art and none of its disadvantages. Accordingly, the disclosures herein are directed towards a card-identification based dynamic method for implementation in conjunction with a centralized issuance system which ensures non-redundancy of asynchronous card inventories and data-generation scripts of said discrete facilities before undertaking any alteration in their respect in the instant issuance process.

Operational environment of the present invention includes two species - first, at least a plurality of ICIFs, and second, a CIFS, which both are linked for interactive real-time communications with each other, via either or both among wireless or wired protocols. The CIFS is arranged to host a plurality of DGF-sets corresponding to card type/s supported by the card issuing authority.

Implementation of the present invention is illustrated step-wise in the accompanying Figure 1. As seen here, the inventive method proposed herein begins at any among the ICIFs where a customer (of the card issuing authority) or user (of the card service) may initiate a request for issuance of a personalized card. Upon said requisition, an operator initializes the ICIF, therein causing a blank / virgin card originally stocked in a card hopper to translate mechanically to a card reader included in the ICIF. Upon receiving said card, the card reader reads its CPLC data, particularly IC type, OS ID, and OS release level, to thereby uniquely identify the card. Notably, CPLC data is read by the card reader using a common art GET DATA command.

It shall be appreciated in the step mentioned in the preceding paragraph, that the identification is not that of a specific card, but only the unique operating system generation and configuration of said card. In alternative embodiments, identification of specific cards may further be provided to disallow any instance of said card being returned for processing in the same or other ICIF provided by the card issuing authority. A decision module is hence included in the CIFS to ascertain whether the detected card is supported, and if yes, whether there is a corresponding DGF-set with the CIFS. If either of these is in negative, the decision module is programmed to output an abort message (alert to the operator and user), thereby avoiding any instance of wrong / unsupported card being used in the ICIF.

In best mode of performing the present invention, the step of reading each blank / virgin card is repeated for each instance of issuance so as to safeguard against any instance of mixed cards being put into the system or abort the process if an unsupported card is detected at any instance. However in an additional embodiment, the present inventors propose repeating the step of reading each blank/ virgin card not for each instance of issuance, to thereby save a processing step and time involved, but rather at exhaustion of a balance count of cards in stock as advertised to the system or fed by the operator while replenishing stock of cards in the card hopper of any ICIF.

With continued reference to the accompanying Figure 1, it can be seen that once the unique operating system generation and configuration of the blank / virgin card is detected, a message is accordingly sent from the ICIF via communications link to the CIFS, said message being coded / interpreted for retrieval of a corresponding DGF-set compatible for the operating system generation and configuration of the blank / virgin card detected.

According to one aspect of the present invention, the CIFS is provided with logic for taking decision on allocating the appropriate DGF-set corresponding to the detected card, which decision is taken on the fly, and accordingly the correct DGF-set is sent, via communications link, to the particular ICIF from which the message is received. Once received, the correct DGF-set is used to generate required data, after which the card is personalized with information provided by the card issuing authority. Ultimately, the card so finalized is outputted by the ICIF and handed over to the customer / end user. It shall be understood here that personalization data would be that specified by the card issuing authority, of which the bank CIFS would necessarily need to have no notion of.

Reference is now made to certain examples which showcase, in a non-limiting way in which the present invention is intended to be implemented.

**Example 1:** Architecture of ICIF

The ICIF is selected from any standard PC/SC smart card reader available in common prior art payment card personalization printers.

**Example 2:** Messaging format

Message from the ICIF to the CIFS is programmed to have a typical APDU format shown below:

$$TLV\ (tag - length - value) \dots\dots\dots\dots (1)$$

**Example 3:** GET DATA command

Command trace of a GET DATA command and the interpreted result employed by a reader for reading advertised attributes of a blank / virgin card, is as under:

```
=> 80 CA 9F 7F 00 .....
(12102 usec)
<= 9F 7F 2A 47 90 50 40 47 91 81 02 31 00 83 58
00 ..*G.P@G...1..X.
11 68 91 45 81 48 12 83 65 00 00 00 00 00 01 2F
31 .h.E.H..e...../1
30 31 31 36 38 00 00 00 00 00 00 00 00 90 00
01168.........
Status: No Error
IC Fabricator: 4790
IC Type : 5040
Operating System ID : 4791
Operating System release date : 8102 (11.4.2008)
Operating System release level: 3100
IC Fabrication Date : 8358 (23.12.2008)
IC Serial Number: 00116891
IC Batch Identifier: 4581
IC Module Fabricator: 4812
IC Module Packaging Date : 8365 (30.12.2008)
ICC Manufacturer: 0000
IC Embedding Date : 0000
IC Pre-Personalizer : 012F
IC Pre-Perso. Equipment Date : 3130 (10.5.2003)
IC Pre-Perso. Equipment ID : 31313638
IC Personalizer : 0000
IC Personalization Date : 0000
IC Perso. Equipment ID : 00000000
```

In Example 3, the reader shall note that various values provided are exemplary and stand for a common art card, which is not restrictive for implementation of the present invention recited herein. Other cards will have their respective profile values.

One skilled in the art will appreciate that the present invention is advantageous over past approaches in that it permits instant / real-time decisioning and remote dispensing of smart cards as well as provides simultaneous support for multiple versions / generations of cards and data-generation scripts. Depending on incorporation of state-of-art communication, and processing protocols and associated technologies, implementation of the present invention resulting in instant issuance of a smart card can be accomplished in a matter of seconds.

The present invention has been reduced to practice and in trial runs performed by the present inventors, has worked efficiently with cards for which OS is same, but of different release level, which indicates that the implementation is sufficiently capable of identifying correct cards and accordingly generate data to be written to said card. Accordingly, the present invention is identified in having the following salient features:

a) Implementation of migration to newer card type/s and / or data generation script/s is allowed seamlessly irrespective of having asynchronous inventories of blank cards, particularly because both old and new card type/s remain supported for use at all times by corresponding DGF-sets called from the CIFS and the migration to newer card type/s and / or data generation script/s is seamless as and when newer card type/s are fed into the ICIFs.

b) Card type/s are uniquely identified using a simplified protocol for elective application correspondingly among a library of data generation script/s compatible to said card type/s, particularly by using a common art GET DATA command to read readily advertised CPLC data on cards.

c) Card type/s are uniquely identified based on identifiers already present and readily advertised by cards, particularly only CPLC data is required for identification of the unique operating system generation and configuration of said card.

d) Non-redundancy of resources, specifically the blank or unused (virgin) cards previously stocked in any instant card issuance facility is avoided because old card type/s remain supported for use at all times by corresponding DGF-sets called from the CIFS.

e) Non-redundancy of resources, specifically the data-generation script/s previously deployed by card issuing authorities is avoided, because old card type/s remain utilized till stocks are exhausted at ICIFs.

f) A remote facility allowing centralized administration and supervisory control over implementation of the present invention is created in form of the CIFS which can be part of the card issuing authority or a separate trusted entity apart from the card issuing authority.

g) The need for forced replenishment of existing card type/s stocked with instant card issuance facilities for implementing migration to newer card type/s and / or data generation script/s is totally negated because old card type/s remain utilized till stocks are exhausted at ICIFs..

h) As a result of above salient features listed at points 1) to 7) above, implementation of the present invention is possible in a manner which is

a. possible without large investments of capital, manpower, and resources.

b. creates no difference in implementation or requires no special knowledge on part of the cardholder; and

c. both functionally and cost-wise effective to manifest at large scale of operations with even a large number of geospatially distributed ICIFs.

As will be realized further, the present invention is capable of various other embodiments and that its several components and related details are capable of various alterations, all without departing from the basic concept of the present invention. Accordingly, the foregoing description will be regarded as illustrative in nature and not as restrictive in any form whatsoever. Modifications and variations of the system and apparatus described herein will be obvious to those skilled in the art. Such modifications and variations are intended to come within ambit of the present invention, which is limited only by the appended claims.

**Claims**

1. A method for identity-based instant issuance of cards, comprising:

a) Arranging at least one instant card issuance facility having an inventory of blank cards and a central instant issuance facility having an library of data-generation script sets to communicate interactively with each other using means of communication common to art;

b) causing, in response to a request for issuance of a card at the at least one instant issuance facility, one among the inventory of blank cards in said at least one instant issuance facility to be selected for personalization;

c) reading, by means of a reader provided within the at least one instant issuance facility, card production life cycle data of each blank card selected for personalization to be read to thereby detect type of said card;

d) sending via means of communication common to art, from the at least one instant issuance facility to the central instant issuance facility, a message conveying the type of card selected for personalization;

e) subjecting, at the central instant issuance facility in response to receiving the message at step d), a first determination of whether the card type conveyed is supported and consequently a second determination if there exists a data-generation script set in its library which is compatible for the card type conveyed;

f) in the event both first and second determinations at step e) are positive, selectively conveying from the central instant issuance facility to the instant issuance facility using means of communication common to art the data-generation script set determined to be compatible for the card type conveyed for scripting the card at said instant issuance facility and allowing it to thereafter receive personalization data to thereby result in an instant issued card which is ready for use; and

g) in the event either of the first and second determinations at step e) are negative, issuing via means of communication common to art a message instructing to abort the issuance process, thereby negating any possibility of issuing an anomalously generated card.

2. The method for identity-based instant issuance of cards according to claim 1, wherein the request for issuance of a card is initiated by a user and alternatively a customer desirous of availing services of the instant card issuance facility.

3. The method for identity-based instant issuance of cards according to claim 1, wherein the step of reading the card production life cycle data to thereby determine type of card includes reading integrated circuit type, identity of operating system, and release level of operating system of said card.

4. The method for identity-based instant issuance of cards according to claim 1, wherein the step of reading the card production life cycle data of each blank card selected for personalization is undertaken by execution of a computer-implemented routine, particularly a common art GET DATA command.

5. The method for identity-based instant issuance of cards according to claim 1, wherein the step of selectively sending one among the inventory of data-generation script sets from the central instant issuance facility to the instant issuance facility for scripting the card involves a prior step determination of said one among the inventory of data-generation script sets being compatible to the card type conveyed via the message received from the at least one instant issuance facility.

6. The method for identity-based instant issuance of cards according to claim 1, wherein the message conveying the type of card selected for personalization prepared in syntax conforming with common art application protocol data unit format represented in general as TLV (tag - length

- value).

7. The method for identity-based instant issuance of cards according to claim 1, wherein the inventory of blank cards is assumed to alternatively include cards of similar and dissimilar generations in no particular sequence of archival in said at least one instant card issuance facility.

8. The method for identity-based instant issuance of cards according to claim 1, wherein the library of data-generation script sets is maintained in a selectivity defined by implementation desired by issuing authority for said cards and of such plurality that at least one among said data-generation script sets is compatible to a corresponding card type present in the inventory of blank cards held within the at least one instant issuance facility.

9. A system for identity-based instant issuance of cards, comprising:

a) at least one instant card issuance facility having an inventory of blank cards;
b) a central instant issuance facility having an inventory of data-generation script sets and decision module

where the at least one instant card issuance facility and the central instant issuance facility are arranged to interact using means of communication common to art.

10. The system for identity-based instant issuance of cards according to claim 7, wherein the instant issuance facility is selected among common art card PC/SC smart card readers available in common art payment card personalization printers, or their equivalents **characterized in** having capability of interactive communications with the central instant issuance facility.

11. The system for identity-based instant issuance of cards according to claim 7, wherein the central instant issuance facility is common art a remote server **characterized in** having capability of interactive communications with the at least one instant card issuance facility.

12. The system for identity-based instant issuance of cards according to claim 7, wherein the means of communication common to art include wired and wireless varieties, their combinations and their equivalents.

**FIGURE 1**

Europäisches
Patentamt

European
Patent Office

Office européen
des brevets

# EUROPEAN SEARCH REPORT

Application Number

EP 18 00 0794

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 01/78020 A1 (VISA INT SERVICE ASS [US]; GRAHAM HARRY E [US]; KEKICHEFF MARC B [US];) 18 October 2001 (2001-10-18) * abstract * * page 8 - page 9 * ----- | 1-12 | INV. G06Q20/34 G06Q10/10 |
| X | EP 1 762 988 A1 (NBS TECHNOLOGIES US INC [CA]) 14 March 2007 (2007-03-14) * abstract * * figure 1a * * paragraph [0076] - paragraph [0079] * ----- | 1-12 | |

TECHNICAL FIELDS
SEARCHED (IPC)

G06Q

The present search report has been drawn up for all claims

| Place of search | Date of completion of the search | Examiner |
|---|---|---|
| Munich | 11 December 2018 | Härdeman, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 00 0794

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2018

| Patent document cited in search report | | Publication date | Patent family member(s) | | Publication date |
|---|---|---|---|---|---|
| WO 0178020 | A1 | 18-10-2001 | AT | 282231 T | 15-11-2004 |
| | | | AU | 4081400 A | 23-10-2001 |
| | | | CA | 2405477 A1 | 18-10-2001 |
| | | | DE | 60015810 T2 | 27-10-2005 |
| | | | EP | 1272983 A1 | 08-01-2003 |
| | | | WO | 0178020 A1 | 18-10-2001 |
| EP 1762988 | A1 | 14-03-2007 | NONE | | |

EPO FORM P0459

For more details about this annex : see Official Journal of the European Patent Office, No. 12/82